# EUROPEAN PATENT SPECIFICATION

(11) **EP 2 193 025 B1**
(45) Date of publication and mention of the grant of the patent: **23.02.2011**
(21) Application number: 08834179.7
(22) Date of filing: 12.08.2008
(51) Int. Cl.: B32B 27/00, B32B 27/18, B32B 27/32

(54) **WHITE OPAQUE FILMS WITH IMPROVED TENSILE AND BARRIER PROPERTIES**
WEISSE UNDURCHSICHTIGE FOLIEN MIT VERBESSERTEN ZUG- UND SPERREIGENSCHAFTEN
FILMS OPAQUES BLANCS PRÉSENTANT DES PROPRIÉTÉS ÉLASTIQUES ET DES PROPRIÉTÉS DE BARRIÈRE AMÉLIORÉES

(30) Priority: 25.09.2007 US 975009 P
(43) Date of publication of application: 09.06.2010
(73) Proprietor: ExxonMobil Chemical Patents Inc., Baytown, TX 77520-2101 (US)
(72) Inventor: KEUNG, Jay Kin, Ming, Humble TX 77346 (US)
(74) Representative: Pols, Ronald Maarten
(86) International application number: PCT/US2008/072922
(87) International publication number: WO 2009/042299

(56) References cited:
- US-A- 5 441 806
- US-A1- 2002 182 435
- US-A1- 2003 082 392

## Description

### BACKGROUND OF THE INVENTION

### Field of the Invention

Embodiments of present invention generally relate to polyolefin films. More particularly, embodiments of the present invention relate to white opaque, oriented polyolefin films, articles made therefrom, and methods for making the same.

### Description of the Related Art

In the packaging industry, it is desirable to place a label on a packaging material to either advertise and promote the product therein, or to simply identify the ingredients thereof. Throughout the years, a number of label stock materials have been used, ranging from paper to polymeric label stock materials. Polymeric label stock materials have been found to be particularly attractive because they provide certain characteristics missing in paper labels. These characteristics include: durability, strength, water resistance, curl resistance, abrasion resistance, gloss, transparency, etc.

Polymeric label stock materials must meet a number of commercial and manufacturing requirements. They must be economical and suitable for manufacturing processes, such as cast film extrusion or blown film extrusion. For example, a formed film material must be capable of hot-stretching without deleterious effect. In this regard, it is generally advantageous to hot-stretch and anneal a formed film, so as to biaxial orient the film and impart a stiffness to it that is different in the machine and transverse directions.

Suitable polymeric label stock materials generally have a printable face or front-side (the face or front-side being the side of the label opposite to and not in direct contact with the substrate), and are die-cuttable, as well as matrix-strippable when used in a pressure-sensitive label construction. Upon die-cutting, the labels can be applied to a substrate via, e.g., a pressure-sensitive label. Cold glue adhesives are viewed as an economical alternative to pressure-sensitive labels that can be suitable for cut-and-stack applications. A label adhered to a substrate with a cold glue adhesive provides good initial adhesion, while minimizing visual defects.

Olefins, including olefin blends, have been employed to meet the demands of polymeric, die-cut label manufacture. The relatively low cost of olefinic resins, coupled with their high strength that allows for low-caliper film, tends to minimize overall material cost. For example, hot-stretched polypropylene and/or polyethylene provides sufficient stiffness in the machine direction, even at a relatively low-caliper thickness, for adequate print registration and dispensing. Further, hot-stretched polypropylene and/or polyethylene provides sufficiently low tensile modulus and, in particular, sufficiently high elongation in the transverse direction for conformability.

Oriented cavitated film compositions are generally known in the art. For example, U.S. 4,632,869 discloses an opaque, biaxial oriented film structure having a polymer matrix with a strata of voids, the voids containing spherical void-initiating particles of polybutylene terephthalate. The structure may also include thermoplastic skin layers, and the film can include from about 1% to 3% by weight of a pigment such as TiO₂ or colored oxides.

U.S. 4,741,950 discloses a differential opaque polymer film with a core layer containing numerous microscopic voids, a rough-appearing wettable first skin layer which contains an antiblocking agent such as silica, silicate, clay, diatomaceous earth, talc and glass, and a second wettable skin layer with a smooth appearance which can be metallized. TiO₂ can be present in the core and/or first skin layer. The film allows a light transmission of 24%.

U.S. 5,176,954 discloses a non-symmetrically layered, highly opaque, biaxial oriented polymer film with a core containing numerous microscopic voids and at least about 1% by weight of opacifying compounds; a first skin layer on one surface of the core containing up to about 12% by weight of inorganic particulate material; and a second skin layer on the other surface of the core. The '954 patent also discloses the benefit which accrues from the addition of inorganic particles such as titanium dioxide to whiten the surface of the outer skin layer of the film structure. The increase in whiteness yields an excellent surface for printed graphics. A further benefit resulting from increased whiteness in the outer skin layer of the film is that it permits the printing of laminated or unlaminated film structures without the need for white ink, offering a significant savings to the end user.

In addition, a number of films with ink-retention properties have been developed. For example, U.S. 6,331,343 describes an oriented film that has at least one fibrous surface. The film includes a melt-processed, immiscible mixture of a semicrystalline polymer component and a void-initiating component. The fibrous surface provides the film with a surface area that renders the film useful in applications such as ink-receptive substrates, wipes, paper-like films and as backings for tape.

U.S. 6,194,506 discloses a polyolefinic resin film that has a calcium carbonate dispersed therein to act as nuclei forming microvoids in the polyolefin film. Thus, the film is rendered with a specific oil absorption.

U.S. 6,086,987 discloses a synthetic paper made of a stretched resin film obtained by stretching a resin film having as a support a resin composition containing (a) from 30-80% by weight of crystalline polyolefin resin and (b) from 70-20% by weight of milled calcium carbonate particles at a temperature lower than the melting point of the crystalline polyolefin.

U.S. 6,074,747 discloses an ink-printable release coating composition including a substrate having a pressure-sensitive adhesive on a back surface and an ink-printable cured release coating on the face surface. The release coating includes a polymer selected from the group consisting of silicones, fluoroacrylates and polyurethane polymers; and resin particles that are different from the polymer to release any abutting materials without ruining the print thereon.

U.S. 5,667,872 discloses a synthetic paper with a multilayer structure including a biaxial stretched film of an olefinic polymer having a melting point of 130°C to 210°C containing 5 to 40% by weight of inorganic fine powder as a base material. Adhered to at least one surface of the base material is an uniaxially stretched layer of a propylene-alpha-olefin copolymer having a melting point at least 5°C lower than the melting point of the base material and from 8 to 65% by weight of inorganic compound.

While prior efforts have resulted in films having improved performance in one or several of the above-described properties, such films have not successfully displayed a desirable combination of higher thickness, opacity, stiffness and permeability. There is a need, therefore, for a new multi-layered film structure capable of exhibiting such balance and desirable combination of higher thickness, opacity, stiffness, and permeability.

### SUMMARY OF THE INVENTION

Provided are multi-layered white opaque films, articles made therefrom, and methods for making the same. Multi-layered white opaque films are composed of at least two skin layers, at least one tie layer, and at least one core layer. The at least two skin layers are each composed of one or more polyolefins. The at least one tie layer is composed of one or more hydrocarbon resins. The at least one core layer is composed of a blend of one or more polyolefins and one or more cavitating agents.

The multi-layered white opaque films described herein exhibit improvements in light transmission, stiffness, and water vapor transmission rate. Moreover, these films were found to exhibit improved cavitation as tested by optical gauge and light transmission.

In at least one embodiment, multi-layered white opaque films include at least two skin layers each comprising one or more polyolefins; at least one tie layer comprising one or more hydrocarbon resins having a softening point less than 165°C; and a core layer comprising a blend of one or more polyolefins and one or more cavitating agents in an amount sufficient to provide a multi-layered white opaque film having a density of 0.75 g/cm3 or less. The tie layer can include the one or more hydrocarbon resins in an amount sufficient to lower the water vapor transmission rate (WVTR), as measured by ASTM F1249, of the film by at least 10%.

In another embodiment, multi-layered white opaque films include at least two skin layers each comprising polypropylene; at least one tie layer comprising 50 wt% or less one or more hydrocarbon resins having a softening point less than 165°C; and a core layer comprising a blend of one or more polyolefins and one or more cavitating agents in an amount sufficient to provide a multi-layered white opaque film having a density of 0.75 g/cm3 or less.

In yet another embodiment, multi-layered white opaque films include at least two skin layers each comprising polypropylene; at least two tie layers each comprising 50 wt% or less one or more hydrocarbon resins having a softening point less than 165°C; and a core layer comprising a blend of one or more polyolefins and one or more cavitating agents in an amount sufficient to provide a multi-layered white opaque film having a density of 0.75 g/cm3 or less, wherein the core layer is disposed between the at least two tie layers.

In at least one specific embodiment, the method for producing a multi-layered white opaque film comprises: co-extruding a core layer, at least one tie layer on both sides of the core layer, and at least one skin layer on the tie layers to provide a multi-layered film, wherein each skin layer comprises one or more polyolefins, each tie layer comprises one or more hydrocarbon resins having a softening point less than 165°C; and the core layer comprising a blend of one or more polyolefins and one or more cavitating agents; orienting the multi-layered film in a first direction to provide a uniaxially oriented film; orienting the uniaxially oriented film in a second direction to provide a biaxially oriented film; and cavitating the biaxially oriented film to provide a multi-layered white opaque film having a density of 0.75 g/cm3 or less, wherein the tie layer comprises the one or more hydrocarbon resins in an amount sufficient to lower the water vapor transmission rate (WVTR), as measured by ASTM F1249, of the film by at least 10%.

### DETAILED DESCRIPTION

Provided are multi-layered white opaque films, articles made therefrom, and methods for making the same. Multi-layered white opaque films are composed of at least two skin layers, at least one tie layer, and at least one core layer. The at least two skin layers are each composed of one or more polyolefins. The at least one tie layer is composed of one or more hydrocarbon resins. The at least one core layer is composed of a blend of one or more polyolefins and one or more cavitating agents.

Multi-layered white opaque films described herein exhibit improvements in light transmission, stiffness, and water vapor transmission rate. Moreover, these films were found to exhibit improved cavitation as tested by optical gauge and light transmission. Without being limited by theory, it is believed that addition of hydrocarbon resins to tie layers of multilayer films, significantly improved cavitation efficiency, in addition to tensile properties, WVTR and other barrier properties while maintaining a low density of the overall film.

Each of the appended claims defines a separate invention, which for infringement purposes is recognized as including equivalents to the various elements or limitations specified in the claims. Depending on the context, all references below to the "invention" may in some cases refer to certain specific embodiments only. In other cases it will be recognized that references to the "invention" will refer to subject matter recited in one or more, but not necessarily all, of the claims. Each of the inventions will now be described in greater detail below, including specific embodiments, versions and examples, but the inventions are not limited to these embodiments, versions or examples, which are included to enable a person having ordinary skill in the art to make and use the inventions, when the information in this patent is combined with available information and technology.

### Core Layer

The one or more core layer can each include one or more thermoplastics and one or more cavitating agents. For example, core layers can include at least one polymer selected from the group consisting of butylene polymer, ethylene polymer, high density polyethylene (HDPE) polymer, medium density polyethylene (MDPE) polymer, low density polyethylene (LDPE) polymer, propylene (PP) polymer, isotactic polypropylene (iPP) polymer, high crystallinity polypropylene (HCPP) polymer, ethylene-propylene (EP) copolymers, ethylene-propylene-butylene (EPB) terpolymers, propylene-butylene (PB) copolymer, an ethylene elastomer, ethylene-based plastomer, propylene elastomer and combinations or blends thereof. In one embodiment there is only one core layer.

As used herein, the term "elastomer" refers to an ethylene-based or propylene-based copolymer that can be extended or stretched with force to at least 100% of its original length (i.e., twice its original length), and upon removal of the force, rapidly (e.g., within 5 seconds) returns to its approximate original dimensions.

As used herein, an "ethylene-based plastomer" refers to an ethylene-based copolymer having a density in the range of 0.850 to 0.920 g/cm³, preferably in the range 0.86 to 0.90 g/cm³, and a Differential Scanning Calorimetry (DSC) melting point of greater than or equal to 40°C.

As used herein, the term "propylene-based plastomer" refers to homopolymers, copolymers, or polymer blends having at least one of the following sets of properties:

density in the range of 0.850 to 0.920 g/cm³, a DSC melting point in the range of 40 to 160°C, and a MFR in the range of 2 to 100 dg/min;

a propylene-ethylene copolymer including from about 75 wt% to about 96 wt% propylene, from about 4 to 25 wt% ethylene and having a density in the range of 0.850 to 0.900 grams/cm³;

a flexural modulus of not more than 2100 MPa and an elongation of at least 300%;

isotactic stereoregularity, from about 84 to 93 wt% propylene, from about 7 to 16 wt% ethylene, a DSC melting point in the range of from about 42 to 85°C, a heat of fusion less than 75 J/g, crystallinity from about 2% to 65%, and a molecular weight distribution from about 2.0 to 3.2;

a polymer blend, comprising at least one polymer (A) and at least one polymer (B), polymer (A) comprising from about 60 to 98 wt% of the blend, and polymer (A) comprising from about 82 to 93 wt% of units derived from propylene and from about 7 to 18 wt% of units derived from a comonomer selected from the group consisting of ethylene and an unsaturated monomer other than ethylene, and polymer (A) can be further characterized as comprising crystallizable propylene sequences, and polymer (B) comprising an isotactic thermoplastic polymer other than polymer (A); and

a polymer blend, comprising at least one polymer (A) and at least one polymer (B), polymer (A) comprising from about 60 to 98 wt% of the blend, and polymer (A) comprising from about 65 to 96 wt% of units derived from propylene and from about 4 to 35 wt% of units derived from a comonomer selected from the group consisting of ethylene and an unsaturated monomer other than ethylene, and polymer (A) can be further characterized as comprising crystallizable propylene sequences, and polymer (B) comprising an isotactic thermoplastic polymer other than polymer (A).

As used herein, the term "stereoregular" refers to a predominant number, e.g., greater than 80%, of the propylene residues in the polypropylene or in the polypropylene continuous phase of a blend, such as impact copolymer exclusive of any other monomer such as ethylene, has the same 1,2 insertion and the stereochemical orientation of the pendant methyl group can be the same, either meso or racemic.

Preferably, the propylene-based plastomer can be or include ethylene-propylene (EP) random copolymers, ethylene-propylene-butylene (EPB) random terpolymers, heterophasic random copolymers, butylene polymers, metallocene polypropylenes, propylene-based or ethylene-based elastomers and/or ethylene-based plastomers, or combinations thereof. In preferred embodiments, the propylene-based plastomer has a density in the range of 0.850 to 0.920 grams/ cm³, a DSC melting point in the range of 40 to 160°C, and a MFR in the range of 2 to 100 dgrams/min. More preferably, the propylene-based plastomer can be a grade of VISTAMAXX^{™} polymer (commercially available from ExxonMobil Chemical Company of Baytown, TX). Preferred grades of VISTAMAXX^{™} are VM6100 and VM3000. Alternatively, the propylene-based plastomer can be a suitable grade of VERSIFY^{™} polymer (commercially available from The Dow Chemical Company of Midland, Michigan), Basell CATALLOY^{™} resins such as ADFLEX^{™} T100F, SOFTELL^{™} Q020F, CLYRELL^{™} SM1340 (commercially available from Basell Polyolefins of The Netherlands), PB (propylene-butene-1) random copolymers such as Basell PB 8340 (commercially available from Basell Polyolefins of The Netherlands), Borealis BORSOFT^{™} SD233CF, (commercially available from Borealis of Denmark), EXCEED^{™} 1012CA and 1018CA metallocene polyethylenes, EXACT^{™} 5361, 4049, 5371, 8201, 4150, 3132 ethylene-based plastomers, EMCC 3022.32 low density polyethylene (LDPE) (commercially available from ExxonMobil Chemical Company of Baytown, TX), Total Polypropylene 3371 polypropylene homopolymer (commercially available from Total Petrochemicals of Houston, TX) and JPP 7500 C2C3C4 terpolymer (commercially available from Japan Polypropylene Corporation of Japan).

In one or more embodiments, the propylene-based plastomer can be a propylene-ethylene copolymer and the first tie layer can include at least 10 wt% of the propylene-based plastomer in the first tie layer, preferably at least 25 wt% of the propylene-based plastomer in the first tie layer, more preferably at least 50 wt% of the propylene-based plastomer in the first tie layer, and most preferably at least 90 wt% of the propylene-based plastomer in the first tie layer. In some preferred embodiments, the first tie layer can include about 100 wt% of the propylene-based plastomer.

In one or more embodiments, the propylene-based plastomer has a propylene content ranging from 75 to 96 wt%, preferably ranging from 80 to 95 wt%, more preferably ranging from 84 to 94 wt%, most preferably ranging from 85 to 92 wt%, and an ethylene content ranging from 4 to 25 wt%, preferably ranging from 5 to 20 wt%, more preferably ranging from 6 to 16 wt%, most preferably ranging from 8 to 15 wt%.

The propylene-based plastomer can have a density ranging from 0.850 to 0.920 grams/cm³, more preferably ranging from 0.850 to 0.900 grams/cm³, most preferably from 0.870 to 0.885 grams/cm³.

The DSC melting point of the propylene-based plastomer can range from 40°C to 160°C, more preferably from 60°C to 120°C. Most preferably, the DSC melting point can be below 100°C.

In one or more embodiments, the propylene-based plastomer has a MFR ranging from 2 to 100 dgrams/min, preferably ranging from 5 to 50 dgrams/min, more preferably ranging from 5 to 25 dgrams/min, most preferably from 5 to 10 dgrams/min.

The propylene-based plastomer can have a molecular weight distribution (MWD) below 7.0, preferably ranging from 1.8 to 5.0, more preferably ranging from 2.0 to 3.2, most preferably, less than or equal to 3.2.

The propylene-based plastomer can have a flexural modulus of preferably not more than 2100 MPa, more preferably not more than 1500 MPa, most preferably ranging from 20 MPa to 700 MPa.

The elongation of the propylene-based plastomer can be at least 300%, more preferably at least 400%, even more preferably at least 500%, and most preferably greater than 1000%. In some cases, elongations of 2000% or more are possible.

The heat of fusion of the propylene-based plastomer can be less than 75 J/g, less than 60 J/g, less than 55 J/g, less than 50 J/g, or less than 45 J/g.

In one or more embodiments, the propylene-based plastomer can have isotactic stereoregular crystallinity. In other embodiments, the propylene-based plastomer has a crystallinity ranging from 2% to 65%.

The propylene-based plastomer can be produced via a single site catalyst polymerization process. In one or more embodiments, the single site catalyst incorporates hafnium.

The core layer can include one or more additional polymers. When one or more additional polymers are present, the propylene-based plastomer can be present in an amount of from at least about 25 wt% to about 75 wt% of the core layer. Amounts of the propylene-based plastomer of less than 25 wt% (e.g., 10 wt%) or greater than 75 wt% (e.g., 90 wt% or more) are also permissible, depending upon the desired properties for the multi-layer film product. The optional additional polymers can include one or more C2-C8 homopolymers, copolymers, or terpolymers.

In a preferred embodiment, the core layer can be an iPP homopolymer. An example of a suitable iPP can be ExxonMobil PP4712E1 (commercially available from ExxonMobil Chemical Company of Baytown, TX). Another suitable iPP can be Total Polypropylene 3371 (commercially available from Total Petrochemicals of Houston, TX). An example of HCPP can be Total Polypropylene 3270 (commercially available from Total Petrochemicals of Houston, TX).

It will be understood by one of ordinary skill in the art that an isotactic propylene homopolymer that has an isotacticity of from about 89 to 99% can be considered either a so-called standard, film-grade isotactic polypropylene or a highly crystalline polypropylene. Standard, film-grade isotactic polypropylene has an isotactic stereoregularity of from about 89% to about 93%. Highly crystalline polypropylene (HCPP) has an isotactic stereoregularity greater than about 93%. HCPP exhibits higher stiffness, surface hardness, lower deflection at higher temperatures and better creep properties than standard, film-grade isotactic polypropylene. Further information relating to HCPP, including methods for preparation thereof, is disclosed in U.S. Pat. No. 5,063,264. Commercially available HCPPs include Amoco 9117 and Amoco 9119 (available from Amoco Chemical Co. of Chicago, Ill.), and Chisso HF5010 and Chisso XF2805 (available from Chisso Chemical Co., Ltd. of Tokyo, Japan). Suitable HCPPs are also available commercially from Solvay in Europe.

Stereoregularity can be determined by IR spectroscopy according to the procedure set out in "Integrated Infrared Band Intensity Measurement of Stereoregularity in Polypropylene," J. L. Koenig and A. Van Roggen, Journal of Applied Polymer Science, Vol. 9, pp. 359-367 (1965) and in "Chemical Microstructure of Polymer Chains," Jack L. Koenig, Wiley-Inerscience Publication, John Wiley and Sons, New York, Chichester, Brisbane, Toronto. Alternatively, stereoregularity can be determined by decahydronaphthalene (decalin) solubility or nuclear magnetic resonance spectroscopy (NMR), e.g., 13C NMR spectroscopy using meso pentads.

### Cavitating Agents

Suitable cavitating agents, also known as void-initiating additives, can include any suitable organic or inorganic material that can be incompatible with the polymer material(s) of the core layer, at the temperature of biaxial orientation, in order to create an opaque film. Examples of suitable void-initiating agents include but are not limited to polybutylene terephthalate (PBT), polyamides such as nylon, cyclic olefin copolymer, solid or hollow preformed glass spheres, metal beads or spheres, ceramic spheres, calcium carbonate, talc, chalk, or combinations thereof.

Cavitation can also be introduced by beta-cavitation, which includes creating beta-form crystals of polypropylene and converting at least some of the beta-crystals to alpha-form polypropylene crystals and creating a small void remaining after the conversion. Preferred beta-cavitated embodiments of the core layer can include a beta-crystalline nucleating agent. Substantially any beta-crystalline nucleating agent ("beta nucleating agent" or "beta nucleator") can be used. The average diameter of the void-initiating particles typically can be from about 0.1 to 10 microns. U.S. Patent 5,691,043 contains a more detailed discussion of cavitating agents which can be used.

### Tie-Layer

In one or more embodiments, the tie- layer can include one or more hydrocarbon resins and any one or more polymers described hereinabove and/or below. The hydrocarbon resin can be present in an amount of up to about 90 wt%, based on the entire weight of the tie layer. In one or more embodiments, the hydrocarbon resin can range from a low of about 10 wt %, 20 wt % or 30 wt % to a high of about 40 wt%, 50 wt%, or 60 wt%, based on the entire weight of the tie layer. In one or more embodiments, the hydrocarbon resin can range from a low of about 12 wt %, 17 wt % or 23 wt % to a high of about 35 wt%, 40 wt%, or 45 wt%, based on the entire weight of the tie layer.

The hydrocarbon resin can be a low molecular weight, hydrogenated hydrocarbon which is compatible with the polyolefin(s) of the core layer and which provide the desired enhancement of film properties. The hydrocarbon resin can have a number average molecular weight less than about 5,000, for example, less than about 2,000, e.g., from about 500 to about 1,000.

The hydrocarbon resin can be natural or synthetic. Preferably, the hydrocarbon resin has a softening point less than 200°C. In one or more embodiments, the softening point can range of from about 60°C to about 180°C. In one or more embodiments, the softening point can range from a low of about 60°C, 70°C, or 80°C to a high of about 160°C, 170°C, or 180°C. In one or more embodiments, the softening point can range from about 100°C to about 150°C, about 120°C to about 145°C, or about 125°C to about 140°C. In one or more embodiments, the softening point of the hydrocarbon resin is less than 165°C, 160°C, 155°C, 150°C, 145°C, 140°C, 130°C, 120°C, 110°C, 100°C, 90°C, 80°C, 70°C, or 60°C.

Suitable hydrocarbon resins include, but are not limited to petroleum resins, terpene resins, styrene resins, and cyclopentadiene resins. In one or more embodiments, the hydrocarbon resin can be selected from the group consisting of aliphatic hydrocarbon resins, hydrogenated aliphatic hydrocarbon resins, aliphatic/aromatic hydrocarbon resins, hydrogenated aliphatic aromatic hydrocarbon resins, cycloaliphatic hydrocarbon resins, hydrogenated cycloaliphatic resins, cycloaliphatic/aromatic hydrocarbon resins, hydrogenated cycloaliphatic/aromatic hydrocarbon resins, hydrogenated aromatic hydrocarbon resins, polyterpene resins, terpene-phenol resins, rosins and rosin esters, hydrogenated rosins and rosin esters, and combinations thereof.

Hydrocarbon resins that can be suitable for use as described herein include EMPR 120, 104, 111, 106, 112, 115, EMFR 100 and 100A, ECR-373 and ESCOREZ® 2101, 2203, 2520, 5380, 5600, 5618, 5690 (commercially available from ExxonMobil Chemical Company of Baytown, TX); ARKON™ M90, M 100, M115 and M135 and SUPER ESTER™ rosin esters (commercially available from Arakawa Chemical Company of Japan); SYLVARES™ phenol modified styrene, methyl styrene resins, styrenated terpene resins, ZONATAC™ terpene-aromatic resins, and terpene phenolic resins (commercially available from Arizona Chemical Company of Jacksonville, FL); SYLVATAC™ and SYLVALITE™ rosin esters (commercially available from Arizona Chemical Company of Jacksonville, FL); NORSOLENE™ aliphatic aromatic resins (commercially available from Cray Valley of France); DERTOPHENE™ terpene phenolic resins (commercially available from DRT Chemical Company of Landes, France); EASTOTAC™ resins, PICCOTAC™ C₅/C₉ resins, REGALITE™ and REGALREZ™ aromatic and REGALITE™ cycloaliphatic/aromatic resins (commercially available from Eastman Chemical Company of Kingsport, TN); WINGTACK™ ET and EXTRA™ (commercially available from Sartomer of Exton, PA); FORAL™, PENTALYN™, and PERMALYN™ rosins and rosin esters (commercially available from Hercules, now Eastman Chemical Company of Kingsport, TN); QUINTONE™ acid modified C₅ resins, C₅/C₉ resins, and acid modified C₅/C₉ resins (commercially available from Nippon Zeon of Japan); and LX™ mixed aromatic/cycloaliphatic resins (commercially available from Neville Chemical Company of Pittsburgh, PA); CLEARON™ hydrogenated terpene aromatic resins (commercially available from Yasuhara of Japan); and PICCOLYTE™ (commercially available from Loos & Dilworth, Inc. of Bristol, PA). Other suitable hydrocarbon resins can be found in U.S. Patent 5,667,902, incorporated herein by reference. The preceding examples are illustrative only and by no means limiting.

Preferred hydrocarbon resins for use in the films described include saturated alicyclic resins. Such resins, if used, can have a softening point in the range of from 85 to 140°C, or preferably in the range of 100 to 140°C, as measured by the ring and ball technique. Examples of suitable, commercially available saturated alicyclic resins are ARKON-P^{®} (commercially available from Arakawa Forest Chemical Industries, Ltd., of Japan). U.S. Patent 5,667,902 contains a more complete discussion on hydrocarbon resins.

### Skin Layer

In one or more embodiments, the skin layer can include any one or more polyolefins described above. In one or more embodiments, the skin layer can include copolymers or terpolymers of ethylene, propylene, and butylene. In some preferred embodiments, the skin layer can include at least one polymer selected from the group consisting of propylene homopolymer, ethylene-propylene copolymer, butylene homopolymer and copolymer, ethylene-propylene-butylene (EPB) terpolymer, ethylene vinyl acetate (EVA), metallocene-catalyzed propylene homopolymer, and combinations thereof. An example of a suitable EPB terpolymer can be Chisso 7794 (commercially available from Chisso Corporation of Japan).

Heat sealable blends can be utilized in providing the skin layer. Thus, along with the skin layer polymer identified above there can be, for example, other polymers, such as polypropylene homopolymer, e.g., one that can be the same as, or different from, the iPP of the core layer. The skin layer can additionally or alternatively include materials selected from the group consisting of ethylene-propylene random copolymers, LDPE, linear low density polyethylene (LLDPE), medium density polyethylene (MDPE), and combinations thereof.

The thickness of each skin layer can be the same or different, and can range from about 0.10 to 7.0 microns, preferably about 0.10 to 4 microns, and most preferably about 0.10 to 3 microns. In one or more embodiments, the skin layer thickness can be from about 0.10 to 2 microns, 0.10 to 1 microns, or 0.10 to 0.50 microns. Each skin layer can have a thickness ranging from about 0.5 to about 2 microns, about 0.5 to about 3 microns, or about 1 to about 3.5 microns.

### Additives

In one or more embodiments, one or more additives can be present in any one or more layers of the multi-layer film. Suitable additives can include, but are not limited to opacifying agents, pigments, colorants, cavitating agents, slip agents, antioxidants, anti-fog agents, anti-static agents, anti-block agents, fillers, moisture barrier additives, gas barrier additives and combinations thereof. Such additives can be used in effective amounts, which vary depending upon the physical or barrier property required.

Examples of suitable opacifying agents, pigments or colorants include but are not limited to iron oxide, carbon black, aluminum, titanium dioxide (TiO₂), calcium carbonate (CaCO₃), polybutylene terephthalate (PBT), talc, beta nucleating agents, and combinations thereof.

Slip agents can include higher aliphatic acid amides, higher aliphatic acid esters, waxes, silicone oils, and metal soaps. Such slip agents can be used in amounts ranging from 0.1 to 2 wt% based on the total weight of the layer to which it can be added. An example of a slip additive that can be useful for this invention can be erucamide.

Non-migratory slip agents can be useful especially in the one or more skin layers. Non-migratory slip agents can include polymethyl methacrylates (PMMA). The non-migratory slip agent can have a mean particle size in the range of from about 0.5 to 8 microns, or 1 to 5 microns, or 2 to 4 microns, depending upon layer thickness and desired slip properties. Alternatively, the size of the particles in the non-migratory slip agent, such as PMMA, can be greater than 20% of the thickness of the skin layer containing the slip agent, or greater than 40% of the thickness of the skin layer, or greater than 50% of the thickness of the skin layer. The size of the particles of such non-migratory slip agent can also be at least 10% greater than the thickness of the skin layer, or at least 20% greater than the thickness of the skin layer, or at least 40% greater than the thickness of the skin layer. Generally spherical, particulate non-migratory slip agents are contemplated, including PMMA resins, such as EPOSTAR^{™} (commercially available from Nippon Shokubai Co., Ltd. of Japan). Other commercial sources of suitable materials are also known to exist. Non-migratory means that these particulates do not generally change location throughout the layers of the film in the manner of the migratory slip agents. A conventional polydialkyl siloxane, such as silicone oil or gum additive having a viscosity of 10,000 to 2,000,000 centistokes can be also contemplated.

Suitable anti-oxidants can include phenolic anti-oxidants, such as IRGANOX® 1010 (commercially available from Ciba-Geigy Company of Switzerland). Such an anti-oxidant can be generally used in amounts ranging from 0.1 to 2 wt%, based on the total weight of the layer(s) to which it can be added.

Anti-static agents can include alkali metal sulfonates, polyether-modified polydiorganosiloxanes, polyalkylphenylsiloxanes, and tertiary amines. Such anti-static agents can be used in amounts ranging from about 0.05 to 3 wt%, based upon the total weight of the layer(s).

Examples of suitable anti-blocking agents can include silica-based products such as SYLOBLOC® 44 (commercially available from Grace Davison Products of Colombia, MD), PMMA particles such as EPOSTAR™ (commercially available from Nippon Shokubai Co., Ltd. of Japan), or polysiloxanes such as TOSPEARL (commercially available from GE Bayer Silicones of Wilton, CT). Such an anti-blocking agent can include an effective amount up to about 3000 ppm of the weight of the layer(s) to which it can be added.

Suitable fillers can include finely divided inorganic solid materials such as silica, fumed silica, diatomaceous earth, calcium carbonate, calcium silicate, aluminum silicate, kaolin, talc, bentonite, clay and pulp.

Suitable moisture and gas barrier additives can include effective amounts of low-molecular weight resins, hydrocarbon resins, particularly petroleum resins, styrene resins, cyclopentadiene resins, and terpene resins.

Optionally, one or more skin layers can be compounded with a wax or coated with a wax-containing coating, for lubricity, in amounts ranging from 2 to 15 wt% based on the total weight of the skin layer. Any conventional wax, such as, but not limited to Carnauba™ wax (commercially available from Michelman Corporation of Cincinnati, OH) that can be useful in thermoplastic films can be contemplated.

### Surface Treatment

One or both of the outer surfaces of any layer of the multi-layered film structure can be surface-treated to increase the surface energy to render the film receptive to metallization, coatings, printing inks, and/or lamination. The surface treatment can be carried out according to one of the methods known in the art including corona discharge, flame, polarized flame, plasma, chemical treatment, or any two or more in combination.

In one or more embodiments, one or both of the outer surfaces of the film, e.g. the skin layer(s) can be metallized or coated. Such surfaces can be metallized using conventional methods, such as physical, chemical, or vacuum metallization techniques by deposition of a metal layer such as aluminum, copper, silver, chromium, or mixtures thereof. Suitable coatings can include acrylic polymers, such as ethylene acrylic acid (EAA), ethylene methyl acrylate copolymers (EMA), polyvinylidene chloride (PVdC), poly(vinyl)alcohol (PVOH) and EVOH. The coatings are preferably applied by an emulsion coating technique, but can also be applied by co-extrusion and/or lamination.

The PVdC coatings that are suitable for use with the multi-layer films are any of the known PVdC compositions heretofore employed as coatings in film manufacturing operations, e.g., any of the PVdC materials described in U.S. Patent 4,214,039, U.S. Patent 4,447,494, U.S. Patent 4,961,992, U.S. Patent 5,019,447, and U.S. Patent 5,057,177, incorporated herein by reference.

Known vinyl alcohol-based coatings, such as PVOH and EVOH, that are suitable for use with the multi-layer films invention include VINOL^{™} 125 or VINOL^{™} 325 (both commercially available from Air Products, Inc. of Allentown, PA). Other PVOH coatings are described in U.S. Patent 5,230,963, incorporated herein by reference.

Before applying a coating composition or top coatings, to the outer surface, the surface to be coated can be treated as described to increase its surface energy. For example, the film can be treated using flame treatment, plasma, corona discharge, film chlorination (e.g., exposure of the film surface to gaseous chlorine), treatment with oxidizing agents such as chromic acid, hot air or steam treatment, flame treatment and the like. Although any of these techniques can be effectively employed to pre-treat the film surface, a frequently preferred method can be corona discharge, an electronic treatment method that includes exposing the film surface to a high voltage corona discharge while passing the film between a pair of spaced electrodes. After treatment of the film surface, the coating composition can be then applied thereto.

In one or more embodiments, a primer coating can be applied as a top coating to one or more surfaces of a substrate (e.g., multi-layer film). The primer can be applied to a surface before application of a coating composition described herein or before application of another top coating. When a primer can be to be applied, the substrate can be surface treated by one of the foregoing methods. In another embodiment, the primer coating can be added to any of the coating compositions described.

Such primer materials are well known in the art and include, for example, epoxy and poly(ethylene imine) (PEI) materials. U.S. Patent 3,753,769, U.S. Patent 4,058,645 and U.S. Patent 4,439,493, each incorporated herein by reference, disclose the use and application of such primers. The primer provides an overall adhesively active surface for thorough and secure bonding with the subsequently applied coating composition and can be applied to a substrate by conventional solution coating means, for example, by roller application.

### Film Structure

To facilitate discussion of different film structures, the following notation is used herein. Each layer of a film is denoted as a different letter, such as A, B, C, D, E, etc. depending on the number of distinct layers. Where a film includes more than one layer such as more than one A layer, one or more prime symbols (', ", "', etc.) are appended to the A symbol (i.e. A', A", etc.) to indicate layers of the same type (conventional or inventive) that can be the same or can differ in one or more properties, such as chemical composition, density, melt index, thickness, etc., within the range of these parameters defined herein. Finally, the symbols for adjacent layers are separated by a slash (/). Using this notation, a three-layer film can be denoted A/B/A or A/C/A. Similarly, a five-layer film of alternating conventional/inventive layers would be denoted A/B/A'/B'/A". Unless otherwise indicated, the left-to-right or right-to-left order of layers does not matter, nor does the order of prime symbols; e.g., an A/B film is equivalent to a B/A film, and an A/A'/B/A" film is equivalent to an A/B/A'/A" film. When a multilayer film has two or more of the same layers, such as two or more B layers for example, the B layers can be the same, or can differ in thickness, chemical composition, density, melt index, CDBI, MWD, additives used, or other properties.

The thickness of each layer of the film, and of the overall film, is not particularly limited, but is determined according to the desired properties of the film. Individual film layers can have a thickness of about 1 to 1000 microns (µm), more typically about 5 to 100 µm. Typical films can have an overall thickness of 10 to 50 µm. In one or more embodiments, the film thickness can range from about 0.5 µm to 250 µm. In one or more embodiments, the film thickness can range from a low of about 10, 50, or 100 µm to about 120, 150, or 200 µm. In one or more embodiments, the film thickness can range from about 25 µm to about 50 µm.

In one or more embodiments, multilayer films having any of the following illustrative structures can be used:

(a) two-layer films, such as A/B and B/B';

(b) three-layer films, such as A/B/A', A/A'/B, A/B/B', B/A/B', BB'/B", A/B/A, and A/C/A;

(c) four-layer films, such as A/A'/A"/B, A/A'/B/A", A/A'/B/B', A/B/A'/B', A/B/B'/A', B/A/A'/B', A/B/B'/B", B/AB'/B" and B/B'/B"/B'";

(d) five-layer films, such as A/A'/A"/A"'B, A/A'/A"/B/A'", A/A'/B/A"/A"', A/A'/A"/B/B', A/A'/B/A"/B', A/A'/B/B'/A", A/B/A'/B'/A", A/B/A'/A"/B, B/A/A'/A"/B', A/A'/B/B'/B", A/B/A'/B'/B", A/B/B'B"/A', B/A/A'/B'/B", B/A/B'/A'/B", B/A/B'/B"/A', A/B/B'B"/B"', B/A/B'/B"/B"', B/B'/A/B"/B"', B/B'/B"/B"'/B"", and A/B/C/B/A; and similar structures for films having six, seven, eight, nine or more layers. It should be appreciated that films having still more layers can be used.

### Producing Films

The films can be formed by any number of well known extrusion or coextrusion techniques. Any of the blown, tentered or cast film techniques commonly used are suitable. For example, a resin composition can be extruded in a molten state through a flat die and then cooled to form a film, in a cast film process. Alternatively, the composition can be extruded in a molten state through an annular die and then blown and cooled to form a tubular, blown film, which can then be axially slit and unfolded to form a flat film. Films of the invention can be unoriented, uniaxially oriented or biaxially oriented. Physical properties of the film can vary from those of the polymer or polymer blend, depending on the film forming techniques used.

In one or more embodiments, the multi-layer films can be uniaxially or biaxially oriented. Orientation in the direction of extrusion is known as machine direction (MD) orientation. Orientation perpendicular to the direction of extrusion is known as transverse direction (TD) orientation. Orientation can be accomplished by stretching or pulling a film first in the MD followed by TD orientation. Blown films or cast films can also be oriented by a tenter-frame orientation subsequent to the film extrusion process, again in one or both directions. Orientation can be sequential or simultaneous, depending upon the desired film features. Preferred orientation ratios can be about three to about six times the extruded width in the machine direction and between about four to about ten times the extruded width in the transverse direction. Typical commercial orientation processes are BOPP tenter process, blown film, and LISIM technology.

For multiple-layer films, the materials forming each layer can be coextruded through a coextrusion feedblock and die assembly to yield a film with two or more layers adhered together but differing in composition. Coextrusion can be adapted to cast film or blown film processes. Multiple-layer films can also be formed by combining two or more single layer films prepared as described above. The total thickness of the resulting multilayer film can vary based upon the application desired. A total film thickness of about 5-100 µm, more typically about 10-50 µm, is suitable for most applications. Those skilled in the art will appreciate that the thickness of individual layers for multilayer films can be adjusted based on desired end use performance, resin or copolymer employed, equipment capability and other factors.

### Film Properties

Films according to the invention exhibit surprising and advantageous stress-strain and barrier properties with unique opacity. Certain unique properties of the films are described in more detail below.

In one or more embodiments, the films can have an optical gauge of about 0.1 mil to about 70; about 0.3 mil to about 55; about 0.5 mil to about 30; or about 1 mil to about 10. Optical gauge can be measured using any method or device known in the art, such as a laser micrometer. For example, the optical gauge can be measured using a Beta LaserMike Model 283-20 available from Beta LaserMike USA.

In one or more embodiments, the films can have a modulus of elasticity of about 50 kpsi to about 1,000 kpsi in the machine direction and about 100 kpsi to about 1,000 kpsi in the transverse direction, as measured according to ASTM D882-97. In one or more embodiments, the films can have a modulus of elasticity of about 75 kpsi to about 700 kpsi in the machine direction and about 150 kpsi to about 800 kpsi in the transverse direction. In one or more embodiments, the films can have a modulus of elasticity of about 100 kpsi to about 500 kpsi in the machine direction and about 200 kpsi to about 700 kpsi in the transverse direction.

In one or more embodiments, the films can have an elongation of about 10% to about 500% in the machine direction and about 50% to 600% in the transverse direction, as measured according to ASTM D882-97. In one or more embodiments, the films can have an elongation of about 25% to about 370% in the machine direction and about 75% to 450% in the transverse direction, as measured according to ASTM D882-97. In one or more embodiments, the films can have an elongation of about 50% to about 200% in the machine direction and about 100% to 300% in the transverse direction, as measured according to ASTM D882-97.

In one or more embodiments, the films can have an ultimate tensile strength of about 2 kpsi to about 40 kpsi in the machine direction and about 3 kpsi to about 40 kpsi in the transverse direction, as measured according to ASTM D882-97. In one or more embodiments, the films can have an ultimate tensile strength of about 4 kpsi to about 30 kpsi in the machine direction and about 4 kpsi to about 30 kpsi in the transverse direction, as measured according to ASTM D882-97. In one or more embodiments, the films can have an ultimate tensile strength of about 6 kpsi to about 20 kpsi in the machine direction and about 6 kpsi to about 20 kpsi in the transverse direction, as measured according to ASTM D882-97.

In one or more embodiments, the films can have a Gurley stiffness of about 3 mg to about 20 mg in the machine direction and about 5 mg to about 20 mg in the transverse direction, as measured according to ASTM 6125-97.

In one or more embodiments, the films can have a permeability as measured in terms of water vapor transmission rate (WVTR), as measured according to ASTM F1249, of less than 15.0 g/m²/day/25 µm. In one or more embodiments, the WVTR is less than 10 g/m²/day/25µm. In one or more embodiments, the WVTR is at less than 5 g/m²/day/25µm.

In one or more embodiments, the films can have a light transmission rate, as measured according to ASTM D1003, of less than 35%. In one or more embodiments, the light transmission is less than 30%. In one or more embodiments, the light transmission is less than 25%.

### Applications

There are many potential applications of the films described herein. Such films can be made into other forms, such as tape and labels, by any one of a number of well known cutting, slitting, and/or rewinding techniques. They can be useful as stretch, sealing, or oriented films.

Typical applications include: packaging, such as bundling, packaging and unitizing a variety of products including various foodstuffs, rolls of carpet, liquid containers and various like goods normally containerized and/or palletized for shipping, storage, and/or display; flexible food packaging, including frozen food packaging; bags, such as trash bags and liners, industrial liners, shipping sacks and produce bags; and surface protection applications, with or without stretching, such as in the temporary protection of surfaces during manufacturing, transportation, etc.

Other embodiments include:
A. A multi-layered white opaque film, comprising:
   at least two skin layers;
   at least one tie layer comprising one or more hydrocarbon resins having a softening point less than 165°C; and
   at least one core layer comprising a blend of one or more polyolefins and one or more cavitating agents,
      wherein the tie layer comprises the one or more hydrocarbon resins in an amount sufficient to lower the water vapor transmission rate (WVTR), as measured by ASTM F1249, of the film by at least 10%.
B. A multi-layered white opaque film of embodiment A, wherein the tie layer comprises the one or more hydrocarbon resins in an amount sufficient to lower the water vapor transmission rate (WVTR), as measured by ASTM F1249, of the film by at least 10% compared to the same film with out the one or more hydrocarbon resins.
C. The multi-layered white opaque film of any preceding embodiment, comprising:
   at least two skin layers each comprising one or more polyolefins;
   at least one tie layer comprising one or more hydrocarbon resins having a softening point less than 165°C; and
   a core layer comprising a blend of one or more polyolefins and one or more cavitating agents in an amount sufficient to provide a multi-layered white opaque film having a density of 0.75 g/cm³ or less,
      wherein the tie layer comprises the one or more hydrocarbon resins in an amount sufficient to lower the water vapor transmission rate (WVTR), as measured by ASTM F1249, of the film by at least 10%.
D. The multi-layered white opaque film of any preceding embodiment, wherein the one or more polyolefins of the skin layers and core layers are the same or different.
E. The multi-layered white opaque film of any preceding embodiment, wherein the one or more polyolefins of the skin layers and core layers each comprise at least 50% by weight propylene units.
F. The multi-layered white opaque film of any preceding embodiment, wherein the one or more polyolefins of the core layer comprises polypropylene having more than 95% isotactic propylene sequences.
G. The multi-layered white opaque film of any preceding embodiment, wherein the WVTR of the film is about 5.0 gm²/day/25 µm or less.
H. The multi-layered white opaque film of any preceding embodiment, wherein the amount of the one or more hydrocarbon resins ranges from about 10 wt% to about 90 wt%.
I. The multi-layered white opaque film of any preceding embodiment, wherein the density of the film is less than 0.50 g/cm².
J. The multi-layered white opaque film of any preceding embodiment, wherein the blend of the core layer comprises about 50% by weight of the one or more polyolefins and about 50% by weight of the one or more cavitating agents.
K. The multi-layered white opaque film of any preceding embodiment, wherein the multi-layered white opaque film has a thickness of about 10 microns or more.
L. A multi-layered white opaque film, comprising:
   at least two skin layers each comprising polypropylene;
   at least one tie layer comprising 50 wt% or less one or more hydrocarbon resins having a softening point less than 165°C; and
   a core layer comprising a blend of one or more polyolefins and one or more cavitating agents in an amount sufficient to provide a multi-layered white opaque film having a density of 0.75 g/cm³ or less.
M. The multi-layered white opaque film of embodiment L, wherein the skin layers comprise one or more polyolefins that are the same or different.
N. The multi-layered white opaque film of embodiments L or M, wherein the one or more polyolefins of the skin layers and core layers each comprise at least 50% by weight propylene units.
O. The multi-layered white opaque film of any of embodiments L through N, wherein the one or more polyolefins of the core layer comprises polypropylene having more than 95% isotactic propylene sequences.
P. The multi-layered white opaque film of any of embodiments L through O, wherein the WVTR of the film is about 5.0 gm²/day/25 µm or less.
Q. The multi-layered white opaque film of any of embodiments L through P, wherein the amount of the one or more hydrocarbon resins ranges from about 10 wt% to about 25 wt%.
R. The multi-layered white opaque film of any of embodiments L through Q, wherein the density of the film is less than 0.50 g/cm³.
S. The multi-layered white opaque film of any of embodiments L through R, wherein the blend of the core layer comprises about 50% by weight of the one or more polyolefins and about 50% by weight of the one or more cavitating agents.
T. The multi-layered white opaque film of any of embodiments L through S, wherein the multi-layered white opaque film has a thickness of about 10 microns or more.
U. A multi-layered white opaque film, comprising:
   at least two skin layers each comprising polypropylene;
   at least two tie layers each comprising 50 wt% or less one or more hydrocarbon resins having a softening point less than 165°C; and
   a core layer comprising a blend of one or more polyolefins and one or more cavitating agents in an amount sufficient to provide a multi-layered white opaque film having a density of 0.75 g/cm³ or less and a water vapor transmission rate (WVTR), as measured by ASTM F1249, of the film of about 5.0 gm²/day/25 µm or less, wherein the core layer is disposed between the at least two tie layers.
V. The multi-layered white opaque film of embodiment U, wherein the skin layers further comprise one or more polyolefins that are the same or different.
W. The multi-layered white opaque film of embodiments U or V, wherein the one or more polyolefins of the skin layers and core layers each comprise at least 50% by weight propylene units.
X. The multi-layered white opaque film of any of embodiments U through W, wherein the one or more polyolefins of the core layer comprises polypropylene having more than 95% isotactic propylene sequences.
Y. The multi-layered white opaque film of any of embodiments U through X, wherein the density of the film is less than 0.50 g/cm³.
Z. The multi-layered white opaque film of any of embodiments U through Y, wherein the blend of the core layer comprises about 50% by weight of the one or more polyolefins and about 50% by weight of the one or more cavitating agents.
AA. A method for producing a multi-layered white opaque film, comprising:
   co-extruding a core layer, at least one tie layer on both sides of the core layer, and at least one skin layer on the tie layers to provide a multi-layered film, wherein each skin layer comprises one or more polyolefins, each tie layer comprises one or more hydrocarbon resins having a softening point less than 165°C; and the core layer comprising a blend of one or more polyolefins and one or more cavitating agents;
   orienting the multi-layered film in a first direction to provide a uniaxially oriented film;
   orienting the uniaxially oriented film in a second direction to provide a biaxially oriented film; and
   cavitating the biaxially oriented film to provide a multi-layered white opaque film having a density of 0.75 g/cm³ or less,
   wherein the tie layer comprises the one or more hydrocarbon resins in an amount sufficient to lower the water vapor transmission rate (WVTR), as measured by ASTM F1249, of the film by at least 10%.

### EXAMPLES

The foregoing discussion can be further described with reference to the following non-limiting examples. Five sample films are provided below (Examples 1-5). Each film was either a three layer (A/C/A) structure or five layer (A/B/C/B/A) structure as noted below in Table 1.

Example 1 is a comparative example that contains no hydrocarbon resin. Examples 2 and 3 are also comparative examples but each having a hydrocarbon resin in the core layer ("C" layer). Examples 4 and5 each had the hydrocarbon resin in one or more tie layers ("B" layer) in accordance with one or more embodiments described. As shown in Table 2 that follows below, the films of Examples 4 and 5 each exhibited surprising and unexpected tensile strength, stiffness and barrier properties while improving light transmission without adjusting the polymer thickness of the overall film.

### Example 1 (comparative example)

A white opaque film having a 0.70 mil poly gauge three layer (A/C/A) structure was made using conventional biaxial orientation techniques. In particular, a basesheet was quenched in a water bath, then subsequently reheated on both sides by contact with hot moving rolls at about 190°F. Once reheated, the basesheet was stretched in the machine direction about 5.5 times in the machine direction. The MD stretched basesheet was further quenched, then reheated in the TDO, then stretched in the transverse direction in a tenter frame oven at about 9 times, at temperatures about 330°F.

The 0.7 mil poly gauge film was cavitated into a 1.35 mil optical gauge white opaque film. The cavitated film was corona treated on one side, then it was wound up in a mill roll form. Tables 1 and 2 below summarize layer compositions and the resulting film properties.

### Example 2:

Example 1 was repeated, except the core layer ("C" layer) included a hydrocarbon resin. The film was made using similar process conditions as described above with reference to Example 1. As shown in Table 2, there was improvement in WVTR and stiffness properties, and little to no improvement in tensile, while maintaining the light transmission.

### Example 3:

Example 2 was repeated, except the core layer was a blend of 30 wt% masterbatch and 50 wt% hydrocarbon resin. As noted in Table 2, there was a loss of cavitation, resulting in a much higher light transmission. In general, desirable properties were not as good as the comparative example 1.

### Examples 4 and 5:

Example 1 was repeated, but instead of a three layer A/C/A structure of Examples 1-3, the 0.70 mil OPP cavitated white opaque film was a five layer A/B/C/B/A type.

**Table 1**

| | Comp. Ex 1 | Comp. Ex. 2 | Comp.Ex. 3 | Ex. 4 | Ex. 5 |
|---|---|---|---|---|---|
| Film structure: | A/C/A | A/C/A | A/C/A | A/B/C/B/A | A/B/C/B/A |
| Layer A: | PP | PP | PP | PP | PP |
| Layer B: | N/A | N/A | N/A | 75 wt% PP | 50 wt% PP |
| | | | | 25 wt% HC | 50 wt% HC |
| Layer C: | 70 wt% PP | 45 wt% PP | 20 wt% PP | 70 wt% PP | 70 wt% PP |
| | 30 wt% MB | 30 wt% MB | 30 wt% MB | 30 wt% MB | 30 wt% MB |
| | | 25 wt% HC | 50 wt% HC | | |
| Film density (g/cm³): | 0.47 | 0.46 | 0.86 | 0.38 g/cc | 0.34 g/cc |
| Polymer Thickness (mil): | 0.70 | 0.70 | 0.70 | 0.70 | 0.70 |

PP was a polypropylene homopolymer having a density of 0.90 g/cm³ (ASTM D792), melt flow rate (MFR) of 1.6 g/10 min (ASTM 1238, 230°C), and is commercially available from ExxonMobil Chemical as ExxonMobil PP 4772.

MB was a blend of CaCO₃ and polypropylene, and is commercially available from Ampacet as Ampacet Pearl 70^{™}.

HC was a hydrogenated hydrocarbon resin having a softening point of 140°C and weight average molecular weight (Mw) of 500 blended with polypropylene, and is commercially available from ExxonMobil Chemical as PA609A.

**Table 2**

| Sample | Locatiion | PA609A | Optical | Lt Trans | Modulus (kpsi) | | Elongation (%) | | Ultimate (kpsi) | | Gurley (mg) | | WVTR (38C, 90% RH) | |
|---|---|---|---|---|---|---|---|---|---|---|---|---|---|---|
| | | (%) | Ga (mil) | (%) | MD | TD | MD | TD | MD | TD | MD | TD | (g/m²/day/25u) | (g/100in²/day/mil) |
| | | | | | | | | | | | | | | |
| 1 | Control | 0 | 1.35 | 41.3 | 174 | 267 | 62 | 22 | 11 | 12.7 | 3.8 | 4.6 | 5.16 | 0.33 |
| 2 | Core | 25 | 1.36 | 43.5 | 229 | 309.5 | 54 | 20 | 8.1 | 9.6 | 4.2 | 4.4 | 3.73 | 0.24 |
| 3 | Core | 50 | 0.73 | 88.5 | 476.5 | 529.5 | 68 | 23 | 11.6 | 13.7 | 2.2 | 3.6 | 4.33 | 0.28 |
| 4 | Tie | 25 | 1.74 | 31.6 | 157 | 239 | 71 | 21 | 9.2 | 11.3 | 4.9 | 6.3 | 3.86 | 0.25 |
| 5 | Tie | 50 | 1.96 | 27.3 | 150 | 235 | 60 | 22 | 8.7 | 10.5 | 7.6 | 10.2 | 4.29 | 0.28 |

Optical gauge was measured using a bench top laser micrometer, namely the LaserMike Model 283-20, provided by Beta LaserMike USA.

Light transmission rate was measured according to ASTM D1003.

Modulus of elasticity, elongation, and ultimate tensile strength were measured according to ASTM D882-97.

Gurley stiffness was measured according to ASTM 6125-97.

Water vapor transmission rate (WVTR) was measured according to ASTM F1249.

As shown in Table 2, there were significant improvements in light transmission, stiffness, and WVTR by the addition of the hydrocarbon resin to the tie layer. The significant improvement in cavitation as tested by optical gauge and light transmission was a surprising result. In essence, the hydrocarbon resin in the tie layers of the multilayer OPP films, significantly improved cavitation efficiency, in addition to tensile properties, WVTR and other barrier properties while maintaining a low density of the overall film.

Certain embodiments and features have been described using a set of numerical upper limits and a set of numerical lower limits. It should be appreciated that ranges from any lower limit to any upper limit are contemplated unless otherwise indicated. Certain lower limits, upper limits and ranges appear in one or more claims below. All numerical values are "about" or "approximately" the indicated value, and take into account experimental error and variations that would be expected by a person having ordinary skill in the art.

Various terms have been defined above. To the extent a term used in a claim is not defined above, it should be given the broadest definition persons in the pertinent art have given that term as reflected in at least one printed publication or issued patent. Furthermore, all patents, test procedures, and other documents cited in this application are fully incorporated by reference to the extent such disclosure is not inconsistent with this application and for all jurisdictions in which such incorporation is permitted.

While the foregoing is directed to embodiments of the present invention, other and further embodiments of the invention can be devised without departing from the basic scope thereof, and the scope thereof is determined by the claims that follow.

## Claims

1. A multi-layered white opaque film, comprising:
at least two skin layers;
at least one tie layer comprising one or more hydrocarbon resins having a softening point less than 165°C; and
at least one core layer comprising a blend of one or more polyolefins and one or more cavitating agents,
wherein the tie layer comprises the one or more hydrocarbon resins in an amount sufficient to lower the water vapor transmission rate (WVTR), as measured by ASTM F1249, of the film by at least 10%.

2. A multi-layered white opaque film of claim 1, wherein the tie layer comprises the one or more hydrocarbon resins in an amount sufficient to lower the water vapor transmission rate (WVTR), as measured by ASTM F1249, of the film by at least 10% compared to the same film with out the one or more hydrocarbon resins.

3. The multi-layered white opaque film of any preceding claim, comprising:
at least two skin layers each comprising one or more polyolefins;
at least one tie layer comprising one or more hydrocarbon resins having a softening point less than 165°C; and
a core layer comprising a blend of one or more polyolefins and one or more cavitating agents in an amount sufficient to provide a multi-layered white opaque film having a density of 0.75 g/cm³ or less,
wherein the tie layer comprises the one or more hydrocarbon resins in an amount sufficient to lower the water vapor transmission rate (WVTR), as measured by ASTM F1249, of the film by at least 10%.

4. The multi-layered white opaque film of any preceding claim, wherein the one or more polyolefins of the skin layers and core layers each comprise at least 50% by weight propylene units.

5. The multi-layered white opaque film of any preceding claim, wherein the one or more polyolefins of the core layer comprises polypropylene having more than 95% isotactic propylene sequences.

6. The multi-layered white opaque film of any preceding claim, wherein the WVTR of the film is about 5.0 gm²/day/25 µm or less.

7. The multi-layered white opaque film of any preceding claim, wherein the density of the film is less than 0.50 g/cm³.

8. The multi-layered white opaque film of any preceding claim, wherein the multi-layered white opaque film has a thickness of about 10 microns or more.

9. The multi-layered white opaque film of any preceding claim, wherein the amount of the one or more hydrocarbon resins ranges from 10 wt% to about 25 wt%.

10. A method for producing a multi-layered white opaque film, comprising:
co-extruding a core layer, at least one tie layer on both sides of the core layer, and at least one skin layer on the tie layers to provide a multi-layered film, wherein each skin layer comprises one or more polyolefins, each tie layer comprises one or more hydrocarbon resins having a softening point less than 165°C; and the core layer comprising a blend of one or more polyolefins and one or more cavitating agents;
orienting the multi-layered film in a first direction to provide a uniaxially oriented film;
orienting the uniaxially oriented film in a second direction to provide a biaxially oriented film; and
cavitating the biaxially oriented film to provide a multi-layered white opaque film having a density of 0.75 g/cm³ or less,
wherein the tie layer comprises the one or more hydrocarbon resins in an amount sufficient to lower the water vapor transmission rate (WVTR), as measured by ASTM F1249, of the film by at least 10%.

## Patentansprüche

1. Weiße, opake Mehrschichtfolie, umfassend:
mindestens zwei Randschichten,
mindestens eine Haftvermittlerschicht, die ein oder
mehrere Kohlenwasserstoffharze mit einem Erweichungspunkt von weniger als 165°C umfasst; und
mindestens eine Kernschicht, die eine Mischung aus einem oder mehreren Polyolefinen und einem oder
mehreren hohlraumbildenden Mitteln umfasst,
wobei die Haftvermittlerschicht das eine oder die mehreren Kohlenwasserstoffharze in einer ausreichenden Menge umfasst, um die Wasserdampfübertragungsrate (water vapor transmission rate, WVTR), bestimmt gemäß ASTM F1249, der Folie um mindestens 10% zu senken.

2. Weiße, opake Mehrschichtfolie nach Anspruch 1, bei der die Haftvermittlerschicht das eine oder die mehreren Kohlenwasserstoffharze in einer ausreichenden Menge umfasst, um die Wasserdampfübertragungsrate (WVTR), bestimmt gemäß ASTM F1249, der Folie um mindestens 10% im Vergleich zur gleichen Folie ohne das eine oder die mehreren Kohlenwasserstoffharze zu senken.

3. Weiße, opake Mehrschichtfolie nach einem der vorgehenden Ansprüche, umfassend:
mindestens zwei Randschichten, wobei jede ein oder
mehrere Polyolefine umfasst;
mindestens eine Haftvermittlerschicht, die ein oder
mehrere Kohlenwasserstoffharze mit einem Erweichungspunkt von weniger als 165°C umfasst; und
eine Kernschicht, die eine Mischung aus einem oder
mehreren Polyolefinen und einem oder mehreren hohlraumbildenden Mitteln in einer ausreichenden Menge umfasst, um der weißen, opaken Mehrschichtfolie eine
Dichte von 0,75 g/cm³ oder weniger zu verleihen,
wobei die Haftvermittlerschicht das eine oder die mehreren Kohlenwasserstoffharze in einer ausreichenden Menge umfasst, um die Wasserdampfübertragungsrate (water vapor transmission rate, WVTR), bestimmt gemäß ASTM F1249, der Folie um mindestens 10% zu senken.

4. Weiße, opake Mehrschichtfolie nach einem der vorgehenden Ansprüche, wobei die einen oder mehreren Polyolefine der Randschichten jeweils mindestens 50 Gew.% Propyleneinheiten umfassen.

5. Weiße, opake Mehrschichtfolie nach einem der vorgehenden Ansprüche, wobei die einen oder mehreren Polyolefine der Randschichten Propylen mit mehr als 95% isotaktischen Propylensequenzen umfassen.

6. Weiße, opake Mehrschichtfolie nach einem der vorgehenden Ansprüche, wobei das WVTR der Folie etwa 5,0 gm²/Tag/25 µm oder weniger beträgt.

7. Weiße, opake Mehrschichtfolie nach einem der vorgehenden Ansprüche, wobei die Dichte der Folie weniger als 0,50 g/cm³ beträgt.

8. Weiße, opake Mehrschichtfolie nach einem der vorgehenden Ansprüche, wobei die weiße, opake Mehrschichtfolie eine Dicke von etwa 10 µm oder mehr aufweist.

9. Weiße, opake Mehrschichtfolie nach einem der vorgehenden Ansprüche, wobei die Menge der einen oder mehreren Kohlenwasserstoffharze im Bereich von 10 Gew.% bis etwa 25 Gew.% liegt.

10. Verfahren zur Herstellung einer weißen, opaken Mehrschichtfolie, bei dem:
eine Kernschicht, mindestens eine Haftvermittlerschicht an beiden Seiten der Kernschicht und mindestens eine Randschicht auf den Haftvermittlerschichten zur Bildung einer Mehrschichtfolie co-extrudiert werden, wobei jede Randschicht ein oder mehrere Polyolefine umfasst, jede Haftvermittlerschicht ein oder mehrere Kohlenwasserstoffharze mit einem Erweichungspunkt von weniger als 165°C umfasst und die Kernschicht eine Mischung aus einem oder mehreren Polyolefinen und einem oder mehreren hohlraumbildenden Mitteln umfasst,
die Mehrschichtfolie in einer ersten Richtung gereckt wird, um eine einachsig gereckte Folie zu bilden,
die einachsig gereckte Folie in einer zweiten Richtung gereckt wird, um eine zweiachsig gereckte Folie zu bilden,
und
in der zweiachsig gereckten Folie Hohlräume gebildet werden, um eine weiße, opake Mehrschichtfolie mit einer Dichte von 0,75 g/cm³ oder weniger bereitzustellen, wobei die Haftvermittlerschicht das eine oder die mehreren Kohlenwasserstoffharze in einer ausreichenden Menge umfasst, um die Wasserdampfübertragungsrate (WVTR), bestimmt gemäß ASTM F1249, der Folie um mindestens 10% zu senken.

## Revendications

1. Film opaque blanc multicouche, comprenant :
au moins deux couches superficielles ;
au moins une couche de liaison comprenant une ou plusieurs résines d'hydrocarbures ayant un point de ramollissement en dessous de 165 °C ; et
au moins une couche centrale comprenant un mélange d'une ou plusieurs polyoléfines et d'un ou plusieurs agents de cavitation,
dans lequel la couche de liaison comprend la ou les résines d'hydrocarbures dans une quantité suffisante pour abaisser le coefficient de transmission de la vapeur d'eau (WVTR) du film, tel que mesuré selon ASTM F1249, d'au moins 10 %.

2. Film opaque blanc multicouche selon la revendication 1, dans lequel la couche de liaison comprend la ou les résines d'hydrocarbures dans une quantité suffisante pour abaisser le coefficient de transmission de la vapeur d'eau (WVTR) du film, tel que mesuré selon ASTM F1249, d'au moins 10 % en comparaison du même film sans la ou les résines d'hydrocarbures.

3. Film opaque blanc multicouche selon l'une quelconque des revendications précédentes, comprenant :
au moins deux couches superficielles, chacune comprenant une ou plusieurs polyoléfines ;
au moins une couche de liaison comprenant une ou plusieurs résines d'hydrocarbures ayant un point de ramollissement en dessous de 165 °C ; et
une couche centrale comprenant un mélange d'une ou plusieurs polyoléfines et d'un ou plusieurs agents de cavitation dans une quantité suffisante pour obtenir un film opaque blanc multicouche ayant une densité de 0,75 g/cm³ ou moins,
dans lequel la couche de liaison comprend la ou les résines d'hydrocarbures dans une quantité suffisante pour abaisser le coefficient de transmission de la vapeur d'eau (WVTR) du film, tel que mesuré selon ASTM F1249, d'au moins 10 %.

4. Film opaque blanc multicouche selon l'une quelconque des revendications précédentes, dans lequel la ou les polyoléfines des couches superficielles et des couches centrales comprennent chacune au moins 50 % en poids de motifs propylène.

5. Film opaque blanc multicouche selon l'une quelconque des revendications précédentes, dans lequel la ou les polyoléfines de la couche centrale comprennent du polypropylène comportant plus de 95 % de séquences de propylène isotactique.

6. Film opaque blanc multicouche selon l'une quelconque des revendications précédentes, le WVTR du film étant d'environ 5,0 gm²/jour/25 µm ou moins.

7. Film opaque blanc multicouche selon l'une quelconque des revendications précédentes, la densité du film étant inférieure à 0,50 g/cm³.

8. Film opaque blanc multicouche selon l'une quelconque des revendications précédentes, le film opaque blanc multicouche ayant une épaisseur d'environ 10 µm ou plus.

9. Film opaque blanc multicouche selon l'une quelconque des revendications précédentes, dans lequel la quantité de la ou les résines d'hydrocarbures va de 10 % en poids à environ 25 % en poids.

10. Procédé de fabrication d'un film opaque blanc multicouche, comprenant :
la coextrusion d'une couche centrale, d'au moins une couche de liaison sur les deux côtés de la couche centrale, et d'au moins une couche superficielle sur les couches de liaison pour obtenir un film multicouche, dans lequel chaque couche superficielle comprend une ou plusieurs polyoléfines, chaque couche de liaison comprend une ou plusieurs résines d'hydrocarbures ayant un point de ramollissement en dessous de 165 °C ; et la couche centrale comprend un mélange d'une ou plusieurs polyoléfines et d'un ou plusieurs agents de cavitation ;
l'orientation du film multicouche dans une première direction pour obtenir un film orienté uniaxialement ;
l'orientation du film orienté uniaxialement dans une deuxième direction pour obtenir un film orienté biaxialement ; et
la cavitation du film orienté biaxialement pour obtenir un film opaque blanc multicouche ayant une densité de 0,75 g/cm³ ou moins,
dans lequel la couche de liaison comprend la ou les résines d'hydrocarbures dans une quantité suffisante pour abaisser le coefficient de transmission de la vapeur d'eau (WVTR) du film, tel que mesuré selon ASTM F1249, d'au moins 10 %.
